# EUROPÄISCHE PATENTSCHRIFT

(11) **EP 0 894 253 B1**
(45) Veröffentlichungstag und Bekanntmachung des Hinweises auf die Patenterteilung: **14.11.2001**
(21) Anmeldenummer: 98904093.6
(22) Anmeldetag: 19.01.1998
(51) Int. Cl.: G01M 9/04

(54) **Grosser Windkanal mit Antischall**
Large wind tunnel with anti sound
Tunnel de soufflerie large avec insonorisation

(30) Priorität: 24.01.1997 DE 19702390
(43) Veröffentlichungstag der Anmeldung: 03.02.1999
(73) Patentinhaber: AUDI AG, 85045 Ingolstadt (DE)
(72) Erfinder: WICKERN, Gerhard, D-85080 Gaimersheim (DE); WALLMANN, Steffen, D-09119 Chemnitz (DE); VON HEESEN, Wilhelm, D-44565 Castrop-Rauxel (DE)
(86) Internationale Anmeldenummer: EP9800253
(87) Internationale Veröffentlichungsnummer: WO9833050

(56) Entgegenhaltungen:
- DE-A- 4 224 488
- PATENT ABSTRACTS OF JAPAN vol. 014, no. 335 (M-1000), 19.Juli 1990 & JP 02 115510 A (MATSUSHITA ELECTRIC IND CO LTD), 27.April 1990,
- D. FÖLLER: "Antischall - Chancen und Grenzen", ATZ, STUTTGART (DE), 1992, Band 94, Nr. 2, Seiten 88 - 93

## Beschreibung

Die Erfindung bezieht sich auf einen Windkanal, insbesondere einen Windkanal für aero-akustische Messungen mit geschlossener Luftführung und Freistrahlmeßstrecke, zur Beaufschlagung größerer Messobjekte, wie beispielweise Personenkraftfahrzeuge, wobei Maßnahmen zur Vermeidung oder zumindest Reduzierung störender Luftschwingungen getroffen sind.

Die z. B. in der Fahrzeugindustrie hauptsächlich verwendeten Windkanäle mit geschlosssener Luftführung und Freistrahlmeßstrecke (sog. Göttinger Bauart) haben den prinzipbedingten Nachteil, daß sich bei bestimmten Luftgeschwindigkeiten niederfrequente Luftschwingungen entwickein, die den Kanal, ähnlich wie eine Orgelpfeife, in Resonanz versetzen können. Die Anregung erfolgt durch periodische Wirbel im Freistrahl, die ihrerseits wiederum durch die Luftsäulenschwingung verstärkt werden. Typische Frequenzen liegen bei 1 bis 7 Hz, also in einem Bereich, der zwar nicht hörbar ist, aber für die tragenden Strukturen des Gebäudes (Windkanales) durchaus kritisch werden kann, wie Erfahrungen gezeigt haben.

Darüberhinaus können auch noch hörbare Geräusche auftreten. Durch die periodisch von der Windkanaldüse abgehenden Ringwirbel wird z. B. der Auffangtrichter mit wechselnden Störmungsgeschwindigkeiten beaufschlagt und erzeugt ein mit der Wirbeifrequenz moduliertes Strömungsrauschen. Außerdem induziert der Ringwirbel auch Geschwindigkeitsschwankungen auf der Strahlachse, so daß auch am Meßobjekt eine Modulation der Strömungsgeräusche auftreten kann.

Um den Rückkopplungsmechanismus zwischen Luftsäulenschwingung und periodischen Ringwirbein zu unterbrechen, kann die Wirbelbildung an der Düse durch Turbulenzgeneratoren gestört werden. Weit verbreitet sind z. B. die sogenannten Seiferth-Flügel. Für eine Verwendung in einem akustischen Windkanal (d. h. in einem Windkanal mit extrem niedrigen Eigengeräusch) sind solche Turbulenzgeneratoren allerdings ungeeignet, da sie funktionsbedingt ein starkes Eigenrauschen entwickeln.

Durch entsprechende Gestaltung des sich an die Meßstrecke anschließenden Luftauffangelementes (Auffangtrichter) läßt sich ebenfalls eine nennenswerte Verbesserung erreichen (DE 42 24 488 A1). Die damit erreichte Abschwächung der Kopplung zwischen Ringwirbel und Luftsäulenresonanz ist jedoch nicht in allen Fällen ausreichend, um die störende Schwingung hinlänglich zu unterdrücken. Dies gilt insbesondere für Meßgeschwindigkeiten, bei denen die Frequenz der Anfachung mit einer Resonanzfrequenz im Kanal exakt zusammenfällt.

Aus der DE 29 41 404 B1 ist eine Maßnahme bekannt, um die Durchführung interferenzfreier dreidimensionaler Messungen zu ermöglichen. Hierfür wird eine Meßstrecke an Windkanälen mit einer das Modell mit Abstand umschließenden, verformbaren Wand vorgeschlagen, wobei die Wandung aus einem Material mit kleinem Elastizitätsmodul und hoher Dehngrenze besteht und auf ihrer Außenseite von einer Vielzahl über Länge und Querschnitt verteilter verstellbarer Abstützungen gehalten ist.
Die DE 38 36 376 A1 schlägt eine Maßnahme zur Vermeidung oder Reduzierung der durch die Meßstreckenwände hervorgerufenen Windkanalinterferenzen vor, wobei die Wändkontur in geeigneter Weise angepaßt wird, dergestalt, daß die Anpassung nur in einer Ebene erfolgt, und zwar zweidimensional.
In beiden Fällen wird nur die jeweilige stationäre Druckverteilung beeinflußt, etwaige Luftsäulenschwingungen können nicht beeinflußt bzw. reduziert werden.

Der Erfindung liegt die Aufgabe zugrunde, eine besonders wirksame und mit geringem Aufwand umsetzbare Maßnahme bei Windkanälen vorzuschlagen, durch die störende, insbesondere in niederfrequente Luftschwingungen vermieden oder doch zumindest beträchtlich reduziert werden können.

Die erfindungsgemäße Lösung ist im Patentanspruch 1 dargelegt.

Die Erfindung unterdrückt also die Kanalresonanz durch eine aktive Beeinflussung des (Schall-)Druckfeldes. Dabei kann die Druckschwankung der Luftsäule durch ein Mikrophon erfaßt werden, woraufhin ein (oder mehrere) Lautsprecher entsprechend gegenphasig angesteuert wird (werden). Da es sich bei der störenden Luftschwingung um eine stehende Welle handelt, kann das Lautsprechersystem an beliebiger Stelle innerhalb des Windkanales oder auch in der Meßkammer angeordnet werden. Bevorzugt geschieht dies jedoch dort, wo sich die Druckbäuche der Luftsäulenschwingung befinden. Wesentlich ist weiter, daß die Lautsprechermembran so in die Kanal-Außenwand eingebaut wird, daß sie das Volumen des Kanales durch ihre Bewegung ändert.

Die grundsätzliche Vorgehensweise, eine Geräuschreduzierung mit aktiven Systemen (Antischall) zu bewirken, ist an sich bekannt (vgl. hierzu ATZ, Automobiltechnische Zeitschrift 94 (1992), Nr. 2, Seiten 88 bis 93). Auch ist es bekannt, bei Aeroakustik-Fahzeugwindkanälen Lautsprecher einzusetzen. Dies allerdings in anderem Zusammenhang (vgl. hierzu ATZ Automobiltechnische Zeitschrift 96 (1994), Nr. 7/8, Seiten 438 bis 446, insbesondere Seite 444, linke Spalte, Ziffer 3.3).

Ein weiterer Vorteil der vorgeschlagenen Lösung liegt darin, daß durch die direkte Beeinflussung des Druckfeldes eine Strömungsführung völlig ohne Störungen möglich ist. Dies gilt gleichermaßen für akustische und strömungsmechanische Störungen (Rauschen und Turbulenz). Die Erfindung ist daher nicht nur für aeroakustische Fahrzeugwindkanäle von Bedeutung, sondern allgemein für Windkanäle mit hoher Anforderung an die Strömungsqualität, z. B. für die Entwicklung neuer Tragflügelprofile.

In einer vorteilhaften Weiterbildung der Erfindung kann anstatt eines einzelnen Lautsprechers ein Array von vielen Lautsprechern zur Erzielung der notwendigen Leistung vorgesehen sein, wobei alle Lautsprecher gleichphasig angesteuert werden sollten.
Beim Einbau eines Lautsprechers im Bereich der Kanalwand kann die Ankopplung über eine wandbündige Zwischenmembran erfolgen.
Beim Einbau eines Lautsprechers im Bereich der Meßstrecke kann die Ankopplung über ein Zwischenvolumen erfolgen, wobei die Durchtrittsfläche zur Meßstrecke deutlich kleiner sein kann, als die Montagefläche des Lautsprechers. Dadurch kann die akustische Auskleidung der Meßstrecke weitgehend erhalten bleiben. Durch eine geeignete Auslegung des Zwischenvolumens kann die Schalleistung der Anordnung sogar noch verstärkt werden (z. B. Bandpaßgehäuse).
Das Mikrophonsignal kann tiefpaßgefiltert werden, so daß nur der Infraschallanteil beeinflußt wird. Es können verschiedene Regelalgorithmen aus dem Antischallbereich für die Ansteuerung verwendet werden (z. B. closefy coupled monopole). Die Regelgröße kann über ein oder mehrere Mikrophone in der Meßstrecke und in den übrigen Kanalwänden aufgenommen werden.
Zur Beeinflussung des Schallfeldes können auch "exotische" Schallquellen herangezogen werden, z. B. geregeltes Ausblasen von Preßluft, Gebläse mit schneller Regelung über Klappensysteme oder Sonderkonstruktionen von Lautsprechern.

Die Erfindung ist nachstehend anhand von Ausführungsbeispielen näher erläutert. In der zugehörigen Zeichnung zeigt
- Fig. 1: eine schematisierte Darstellung (Draufsicht) eines erfindungsgemäß aufgebauten Windkanales,
- Fig. 2: eine schematisierte "Abwicklung" des Windkanales mit beispielhaftem Verlauf einer stehenden Welle,
- Fig. 3: eine Lautsprecheranordnung mit bevorzugter Anwendung im Bereich einer Kanalwand,
- Fig. 4: eine Lautsprecheranordnung mit bevorzugter Anwendung im Bereich einer Meßstreckenwand.

Ein Windkanal 1, größenmäßig beispielsweise dergestalt ausgebildet, daß er für Messungen an Personenkraftfahrzeugen geeignet ist, weist im Anschluß an eine Luftaustrittsdüse 2 eine als Freistrahlmeßstrecke ausgebildete Meßstrecke 3 mit Drehscheibe 4 und entsprechendem Zubehör auf, auf der das Meßobjekt plaziert werden kann. Die Meßstrecke 3 ist relativ weiträumig durch mit reflektionsarmen Auskleidungen versehene Begrenzungswände 5 abgeschlossen, die neben der Meßstrecke 3 noch einen Teil der Luftaustrittsdüse 2 sowie einen den Freistrahl aufnehmenden Auffangtrichter 6 einschließen.

Dem einen Öffnungswinkel von z. B. 45° aufweisenden Auffangtrichter 6 ist über eine Engstelie 7 ein bis zu einer ersten Umlenkecke 8 reichender Diffusor 9 nachgeschaltet. Auffangtrichter 6, Engstelie 7 und Diffusor 9 sind mit einem ausreichend bemessenen Belag aus schallschluckenden Materialien (z. B. offenporiger Schaum, Mineralwolle) ausgekleidet.

An die Umlenkecke 8 schließt sich ein bis zu einer weiteren, mit Kulissenschalldämpfern 12 ausgestatteten und somit bedämpften Umlenkecke 13 reichendes weiteres Kanalstück 14 an.
Weiter stromab befindet sich eine ebenfalls bedämpfte (Umhüllung 15) Gebläseeinheit 16 (Axialgebläse), an die sich ein Diffusor 17 anschließt, der bis zu einer weiteren, ebenfalls mittels Kulissenschalldämpfern 12 bedämpften Umlenkecke 18 reicht.

An ein weiteres gerades Kanalstück 19 schließt sich die letzte Umlenkecke 20 an, der wiederum ein Steildiffusor 22 sowie eine der Düse 2 vorgelagerte Düsenvorkammer 23 mit verschiedenen Einbauten, wie Gleichrichter 24, Turbulenznetz 25 usw. zur Beruhigung der Luftströmung folgen.

In erfindungsgemäßer Weise ist nun innerhalb der Meßstrecke 3 und dort im Bereich (z. B. oberhalb) der Luftaustrittsdüse 2 ein Mikrophon 26 angeordnet und über Leitung 27 mit einer Steuer-Nerstärkereinheit 28 verbunden. Von dieser ausgehend führen Leitungen 29,30,31 zu Lautsprechereinheiten 33,34,35, die an einer Kanalwand 36 im Bereich des dem Axialgebläse 16 nachgeschalteten Diffusors 17 bzw. an der Begrenzungswand 5 der Meßstrecke 3 angeschlossen sind. Selbstverständlich kann auch innerhalb der Luftführung des Windkanales 1, beispielsweise im Diffusor 17, ein entsprechendes Mikrophon angeordnet sein.

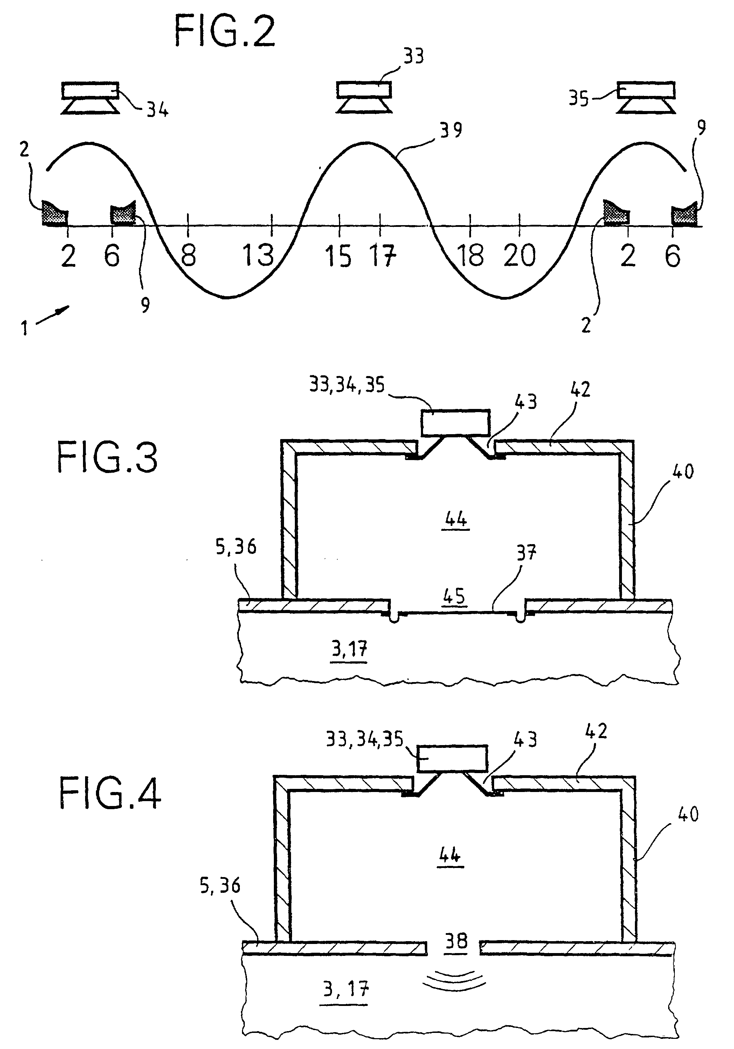

Die Schallübertragung bei der Lautsprechereinheit 33 erfolgt über eine wandbündige Zwischenmembrane 37, während die Schallübertragung bei den Lautsprechereinheiten 34,35 über Wanddurchbrüche 38 geschieht.
Werden nun über das Mikrophon 26 tieffrequente (z. B. 1-7 Hz) Luftsäulenschwingungen (stehende Welle 39, vgl. Fig.2) erfaßt, so erfolgt über die Steuer-/Verstärkereinheit 28 eine entsprechende Signalverarbeitung mit gegenphasiger Anregung der Lautsprechereinheiten 33 - 35 zur Erzeugung des "Antischalles".

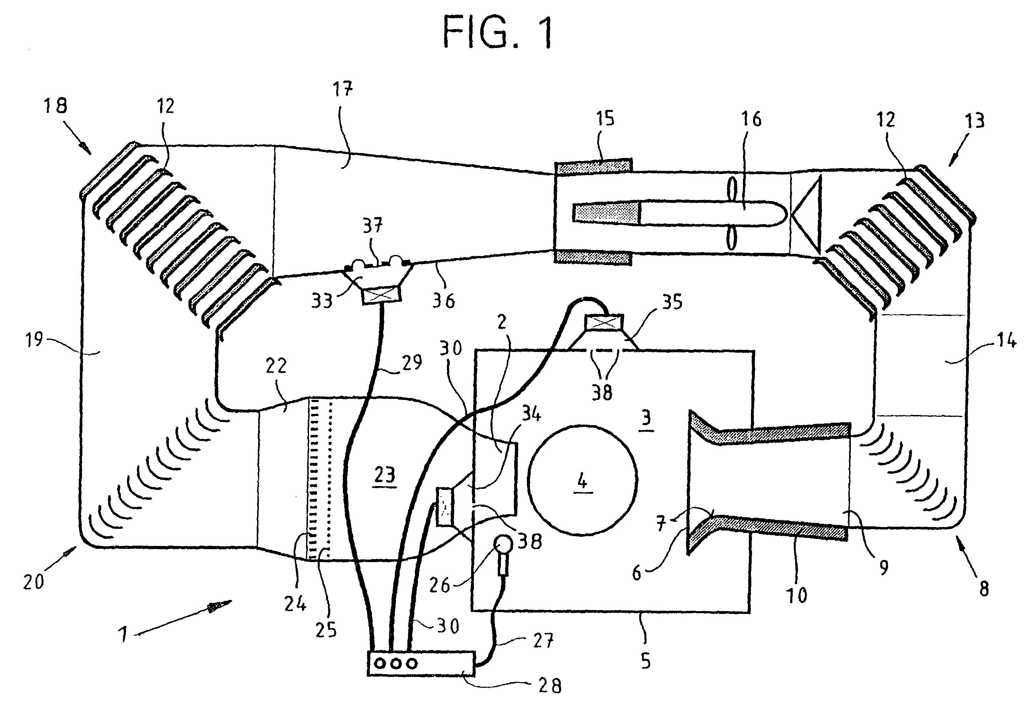

In Fig. 2 ist in einer schematisierten Abwicklung des Windkanales 1 ein Beispiel einer sich darin bildenden stehenden Welle 39 angedeutet. Die angegebenen Bezugszeichen verdeutlichen die jeweilige Position der in Zusammenhang mit Fig. 1 beschriebenen einzelnen Bestandteile des Windkanales 1.

Die Figuren 3 und 4 zeigen alternative Ausführungsformen bezüglich der Anordnung der Lautsprechereinheiten 33 - 35. So ist an die Kanaiwand 36 bzw. die Begrenzungswand 5 der Meßstrecke 3 ein Lautsprecher-Aufnahmegehäuse 40 angesetzt, dessen Rückwand 42 in einer Ausnehmung 43 die Lautsprechereinheit 33 - 35 aufnimmt. Damit wird ein Zwischenvolumen 44 gebildet. Während nun gemäß Fig. 3 eine Durchtrittsöffnung 45 zum Kanalinneren (z. B. Diffusor 17) bzw. zur Meßstrecke 3 von der wandbündigen Zwischenmembrane 37 (z. B. Alublech, CFK) abgedeckt ist, ist der Wanddurchbruch 38 gemäß Ausführungsbeispiel nach Fig. 4 deutlich kleiner, so daß beispielsweise eine in diesem Bereich vorhandene akustische Auskleidung weitestgehend erhalten bleiben kann und so wenig als möglich unterbrochen wird.

## Patentansprüche

1. Windkanal, insbesondere für aero-akustische Messungen mit geschlossener Luftführung und Freistrahlmessstrecke, zur Beaufschlagung größerer Messobjekte, wie beispielsweise Personenkraftfahrzeuge, wobei Maßnahmen zur Vermeidung oder zumindest Reduzierung störender Luftschwingungen getroffen sind, **gekennzeichnet durch** die Anordnung einer Einrichtung (33 - 35) zur Einleitung gegenphasiger Luftschwingungen.

2. Windkanal nach Anspruch 1, **dadurch gekennzeichnet, dass** die Einrichtung (33 - 35) im Bereich eines Druckbauches der störenden Luftschwingung (39) angeordnet ist.

3. Windkanal nach Anspruch 1, **gekennzeichnet durch** die Anordnung einer oder mehrerer- Lautsprechereinheiten (33 - 35) an einer Messstrecken-Begrenzungswand (5) und/oder an einer Kanalwand (36).

4. Windkanal nach Anspruch 3, **gekennzeichnet durch** eine wandbündige Zwischenmembrane (37).

5. Windkanal nach Anspruch 3, **gekennzeichnet durch** einen oder mehrere Wanddurchbrüche (38) im Bereich einer Lautsprechereinheit (33 - 35).

6. Windkanal nach Anspruch 3, **dadurch gekennzeichnet, dass** an dessen Wandung (5,36) ein ein Zwischenvolumen (44) bildendes Lautsprecher-Aufnahmegehäuse (40) angesetzt ist, dessen Rückwand (42) in einer Ausnehmung (43) die Lautsprechereinheit (33 - 35) aufnimmt.

7. Windkanal nach einem der Ansprüche 1 - 6, **dadurch gekennzeichnet, dass** im Bereich einer Luftaustrittsdüse (2) und/oder innerhalb der Luftführung des Windkanales (1) ein Mikrophon (26) angeordnet und über Leitung (27) mit einer Steuer-Verstärkereinheit (28) verbunden ist, von der ausgehend Leitungen (29,30,31) zu an die Kanalwandung (5,36) angesetzten Lautsprechereinheiten (33,34,35) führen.

## Claims

1. Wind tunnel, in particular one for aero-acoustic measurements, with return flow and free-jet working section, for use on fairly large test objects such as for instance passenger cars, measures being in place to avoid or at least reduce interfering pulses of air, **characterised by** the fact the arrangement of a device (33 - 35) for introducing pulses of air in opposite phase.

2. Wind tunnel according to claim 1, **characterised in that** the device (33 - 35) is arranged in the region of a pressure bulge of the interfering pulse of air (39).

3. Wind tunnel according to claim 1, **characterised by** the arrangement of one or more loudspeaker units (33 - 35) on a boundary wall (5) of the working section and/or on a wall (36) of the tunnel.

4. Wind tunnel according to claim 3, **characterised by** an intermediate membrane (37) flush with the wall.

5. Wind tunnel according to claim 3, **characterised by** one or more breaks in the wall (38) in the region of a loudspeaker unit (33 - 35).

6. Wind tunnel according to claim 3, **characterised in that** set on the wall (5, 36) thereof is a loudspeaker-accommodating enclosure (40), the rear wall (42) of which accommodates the loudspeaker unit (33 - 35) in a recess (43).

7. Wind tunnel according to any of claims 1 to 6, **characterised in that** a microphone (26) is arranged in the region of an air outlet nozzle (2) and/or within the flow of the wind tunnel (1) and is connected to a control amplifier unit (28) from which cables (29, 30, 31) run to loudspeaker units (33, 34, 35) set on the tunnel wall (5, 36).

## Revendications

1. Tunnel de soufflerie, en particulier pour effectuer des mesures aéroacoustiques, avec un guidage de l'air en circuit fermé et une veine de mesure du rayonnement libre, pour essayer de gros objets à mesurer, tels que par exemple des voitures particulières, des dispositions étant prises pour éviter ou au moins réduire les vibrations parasites de l'air, **caractérisé par** l'agencement d'un organe (33 à 35) pour l'induction de vibrations de l'air en opposition de phase.

2. Tunnel de soufflerie selon la revendication 1, **caractérisé en ce que** l'organe (33 à 35) est disposé dans la zone d'un ventre de pression de la vibration parasite d'air (39).

3. Tunnel de soufflerie selon la revendication 1, **caractérisé par** l'agencement d'une ou plusieurs unités de haut-parleur (33 à 35) sur une paroi de limitation (5) de la veine de mesure et/ou sur une paroi de soufflerie (36).

4. Tunnel de soufflerie selon la revendication 3, **caractérisé par** une membrane intermédiaire (37) sur la paroi.

5. Tunnel de soufflerie selon la revendication 3, **caractérisé par** une ou plusieurs traversées de paroi (38), ménagées dans la zone d'une unité de haut-parieur (33 à 35).

6. Tunnel de soufflerie selon la revendication 3, **caractérisé en ce que**, sur sa paroi (5, 36) est placé un boîtier de logement de haut-parleur (40) formant un volume intermédiaire (44), bottier dont la paroi arrière (42) loge, dans un évidement (43), l'unité de haut-parleur (33 à 35).

7. Tunnel de soufflerie selon l'une des revendications 1 à 6, **caractérisé en ce que**, dans la zone d'une buse de sortie d'air (2) et/ou à l'intérieur du guidage d'air de la soufflerie (1), est disposé un microphone (26) relié, par une ligne (27), à une unité amplificatrice de commande (28), d'où des lignes (29, 30, 31) sortantes mènent à des unités de haut-parleur (33, 34, 35) placées sur la paroi de soufflerie (5, 36).
